# FASCICULE DE BREVET EUROPEEN

(11) **EP 3 411 821 B1**
(45) Date de publication et mention de la délivrance du brevet: **15.06.2022**
(21) Numéro de dépôt: 17707626.2
(22) Date de dépôt: 03.02.2017
(51) Int. Cl.: G06F 21/10, G06F 21/62, G06F 16/40, G06F 16/78

(54) **PROCÉDÉ DE STOCKAGE DE CONTENUS, PROCÉDÉ DE CONSULTATION DE CONTENUS, PROCÉDÉ DE GESTION DE CONTENUS ET LECTEURS DE CONTENUS**
VERFAHREN ZUR SPEICHERUNG VON INHALTEN, VERFAHREN ZUR ABFRAGE VON INHALTEN, VERFAHREN ZUR INHALTSVERWALTUNG UND INHALTSLESER
METHOD FOR STORING CONTENT, METHOD FOR CONSULTING CONTENT, METHOD FOR MANAGING CONTENT AND CONTENT READERS

(30) Priorité: 04.02.2016 FR 1650891
(43) Date de publication de la demande: 12.12.2018
(73) Titulaire: ORANGE, 92130 Issy-les-Moulineaux (FR)
(72) Inventeur: OTTOGALLI, François-Gaël, 73190 Challes Les Eaux (FR); RAIPIN PARVEDY, Philippe, 35140 Saint Ouen Des Alleux (FR)
(86) Numéro de dépôt international: PCT/FR2017/050247
(87) Numéro de publication internationale: WO 2017/134399

(56) Documents cités:
- US-A1- 2015 113 400
- US-A1- 2015 205 628
- "THE CRYPTOLOPE LIVEÜ PRODUCT", IBM CRYPTOLOPE LIVE. GENERAL INFORMATION GUIDE, XX, XX, 1 janvier 1997 (1997-01-01), pages 1-36, XP002908144,

## Description

L'invention concerne un procédé de stockage de contenus et un lecteur de contenus.

Actuellement, lorsqu'un contenu est stocké, il est écrit dans une mémoire interne ou externe d'un lecteur de contenus. Le lecteur de contenus comporte soit un circuit d'accès adapté au format du contenu stocké soit un processeur mettant en œuvre un procédé de consultation adapté au format du contenu. Ainsi, le lecteur de contenus peut lire uniquement les contenus stockés dans cette mémoire dont le format correspond au format du circuit/procédé de consultation.

Le problème est que les formats évoluant dans le temps, lors d'une lecture ultérieure d'un contenu stocké, le circuit/procédé de consultation à un format donné peut ne plus être disponible. Le lecteur de contenus ne pourra alors plus lire les contenus de ce format donné. Ainsi, le cycle de vie du contenu stocké correspond au cycle de vie de la version du format dans lequel il a été stocké.

Pour éviter ce problème, les concepteurs de circuit/procédé de consultation d'un format donné de contenu faisant évoluer leur circuit/procédé, prévoient généralement que le circuit/procédé de consultation correspondant à une nouvelle version du format donné comporte le circuit/procédé de consultation correspondant à la version antérieure du format donné. Ainsi, Un circuit/procédé de consultation d'un format donné pourra lire non seulement les contenus stockés dans une version actuelle du format donné mais aussi dans la(les) version(s) antérieure(s) de ce format donné.

L'inconvénient de cette solution est que le propriétaire du contenu stocké dépend de la bonne volonté du concepteur de circuit/procédé de consultation et de la compatibilité technique entre le circuit/procédé de consultation de la nouvelle version et le circuit/procédé de consultation de la version précédente.

Une autre solution proposée directement par les systèmes de stockage tel que les systèmes de gestion électronique de document, est, lors de la mise à jour de formats, la conversion des contenus stockés dans un format mis à jour. Cela nécessite, la surveillance des mises à jour de format, et la conversion de chaque contenu stocké dans ce format à chacune des mises à jour. Cette solution est donc lourde à mettre en œuvreà la fois en termes de coût de calcul, mais aussi en termes de mémoire car le temps de la conversion, chaque contenu existe dans le format précédent et le format mis à jour.

La demande américaine US2015205628 décrit l'utilisation de machine virtuelle java. Ainsi, lorsque le téléphone lit grâce à un lecteur un fichier JAR stocké dans une mémoire, il exécute automatiquement le contenu stocké dans ce fichier au moyen de la machine virtuelle Java du téléphone. L'inconvénient d'un tel fichier JAR est qu'il ne reste pas disponible dans une version ultérieure à la version utilisée lors du stockage.

La demande américaine US2015113400 décrit un système et un procédé de fourniture de contenu au moyen d'un lecteur de contenu embarqué via un service de partage de contenu sans préciser comment le lecteur embarqué est exécuté. Par conséquent, le contenu ne peut pas être lu dans une version ultérieure du lecteur embarqué.

Le guide « The cryptolope Live product» IBM Cryptolope live general information guide, XX, XX 1 janvier 1997, pages 1-36 propose un objet formé par un contenu et des données qui sont liés dans un objet persistent. Ainsi un contenu placé dans un objet cryptolope, tel qu'un fichier JAR, peut être retrouvé dynamiquement. Il est exécuté par un lecteur cryptolope c'est-à-dire une machine virtuelle exécutant les objets cryptolopes. Par conséquent, le contenu ne reste pas non plus disponible dans une version ultérieure.

Ainsi les solutions proposées ne concernent que les contenus stockés dans un format pour lequel un circuit/procédé de consultation reste disponible dans une version ultérieure à la version utilisée lors du stockage du contenu.

En effet, lorsqu'un format disparaît, cette solution ne garantit pas l'accès au contenu stocké dans le format disparu. Ainsi, le cycle de vie du contenu stocké correspond au cycle de vie du format (quelle que soit sa version) dans lequel il a été stocké.

Et, lorsqu'un premier utilisateur stocke un contenu dans une version donnée d'un format donné sur une mémoire qu'il partage (en lui donnant les droits d'accès, en lui donnant le support d'information comportant la mémoire...) avec un deuxième utilisateur, le deuxième utilisateur ne pourra lire ce contenu qu'avec un lecteur de contenus comportant un dispositif d'accès ou mettant en œuvre un procédé de consultation du format donné dans cette version ou une version ultérieur. Ainsi, un deuxième utilisateur utilisant un lecteur de contenus connecté à cette mémoire et comportant un dispositif d'accès ou mettant en œuvre un procédé de consultation du format donné dans une version antérieur, n'aura pas accès à ce contenu.

Un des buts de la présente invention est de remédier à des insuffisances de l'état de la technique.

Un objet de l'invention est un procédé de stockage de contenus mis en œuvre par un premier lecteur de contenus, le premier lecteur de contenus comportant un processeur, une première mémoire de stockage de contenus, une couche de virtualisation et une couche d'abstraction matérielle, le procédé de stockage comportant
- une réception d'une requête de stockage d'un premier contenu d'un format donné,
- en réponse à la requête de stockage, une génération d'un premier contenu autonome comportant une création d'un premier conteneur dans lequel sont stockés au moins le premier contenu à stocker dans le format donné, et un premier traitement d'accès adapté au format donné et associé au premier contenu à stocker, les données stockées dans le premier conteneur constituant le premier contenu autonome;
- une génération d'un premier traitement d'exécution stocké dans la couche de virtualisation en association avec le premier contenu autonome, le premier traitement d'exécution étant adapté à une exécution d'un premier traitement d'accès du premier contenu autonome sur la couche d'abstraction matérielle; et
- en réponse à une modification, sur le premier lecteur de contenus, du premier traitement d'accès, une mise à jour, en fonction du premier traitement d'accès modifié, d'au moins un premier traitement d'accès associé à un premier contenu dans un premier conteneur d'un premier contenu autonome stocké sur la première mémoire.

Ainsi, l'accès au contenu stocké est garanti tant que le lecteur de contenu est apte à mettre en œuvre le traitement d'accès stocké avec le contenu dans le contenu autonome. Donc, non seulement le cycle de vie du contenu est ainsi prolongé mais en plus l'accessibilité par des tiers autorisés est facilité puisqu'ils n'ont pas à rechercher un dispositif d'accès spécifique pour consulter un contenu qu'ils n'ont pas stocké au moyen d'un de leur dispositif de stockage mais dont ils ont obtenu les droits d'accès.

Avantageusement, le procédé de stockage comporte une écriture, dans la première mémoire, du premier contenu autonome.

Ainsi, les échanges sont réduits puisque le procédé de stockage comporte directement l'écriture dans la mémoire au lieu de commander un dispositif d'écriture dans une mémoire.

Avantageusement, le procédé de stockage comporte, lors de la génération d'un premier contenu autonome, une génération de traitement d'exécution adapté à l'exécution d'un premier traitement d'accès du premier contenu autonome sur la couche d'abstraction matérielle, le traitement d'exécution généré étant stocké dans la couche de virtualisation en association avec le premier contenu autonome.

Le traitement d'exécution étant associé au contenu autonome d'un contenu, l'exécution du traitement d'accès sur le lecteur de contenu présente plus de garanti de succès prolongeant d'autant la durée de vie du contenu stocké dans ce contenu autonome.

Avantageusement, le procédé de stockage comporte, lors d'une génération d'un deuxième contenu autonome, une recherche d'un traitement d'exécution adapté à l'exécution d'un premier traitement d'accès du deuxième contenu autonome sur la couche d'abstraction matérielle du premier lecteur.

Ainsi, soit le traitement d'exécution n'est pas déjà stocké, et dans ce cas, il peut être enregistré permettant une meilleure garanti d'accès au contenu du deuxième contenu autonome par exécution de l'accès au contenu directement sur la couche d'abstraction matérielle ; soit le traitement d'exécution est déjà stocké et, dans ce cas, l'utilisation de la couche de virtualisation peut être optimisée puisque le traitement d'exécution peut n'être inscrit qu'une seule fois quel que soit le nombre de contenus autonomes de la première mémoire pour lesquels ce traitement d'exécution sera utilisé.

Avantageusement, le procédé de stockage comporte, le cas échéant, une association avec le deuxième contenu autonome du traitement d'exécution résultant de la recherche et déjà stocké dans la couche de virtualisation.

Ainsi, l'utilisation de la couche de virtualisation est optimisée puisque le traitement d'exécution peut n'être inscrit qu'une seule fois quel que soit le nombre de contenus autonomes de la première mémoire pour lesquels ce traitement d'exécution sera utilisé.

Avantageusement, lors d'une copie, sur la première mémoire de stockage de contenus du premier lecteur de contenus, d'un contenu d'un contenu autonome stocké dans une deuxième mémoire de stockage de contenus d'un deuxième lecteur de contenus, le procédé de stockage comporte :
- un stockage du contenu autonome du contenu à copier dans la première mémoire, et
- une modification de la couche de virtualisation du premier lecteur de contenus associant un traitement d'exécution adapté à l'exécution du traitement d'accès du contenu autonome du contenu copié sur la couche d'abstraction matérielle du premier lecteur.

Ainsi, le procédé de stockage garanti notamment la portabilité du contenu sur une autre mémoire que celle sur laquelle il a été stocké à l'origine permet de garantir l'accessibilité au contenu stocké malgré les éventuels problèmes de fiabilités des supports de stockage électronique constituant la mémoire, notamment lié à leur durée de vie.

Avantageusement, le procédé de stockage comporte, lors d'une modification, sur le premier lecteur de contenus, d'un traitement d'accès, une mise à jour, en fonction du traitement d'accès modifié, d'au moins un traitement d'accès associé à un contenu dans un conteneur d'un contenu autonome stocké sur la première mémoire.

Un objet de l'invention est aussi un procédé de consultation de contenus mis en œuvre par un lecteur de contenus, le lecteur de contenus comportant un processeur, une mémoire de stockage de contenus, une couche de virtualisation et une couche d'abstraction matérielle, le procédé de consultation comporte:
- lors d'une réception d'une demande d'accès à un premier contenu d'un format donné stocké dans la première mémoire du premier lecteur de contenus, une recherche du premier con tenu demandé dans la mémoire de stockage de contenus, dans laquelle un premier traitement d'accès adapté au format donné est associé avec le premier contenu demandé, et dans laquelle le premier traitement d'accès, le premier contenu et un lien avec un premier traitement d'exécution respectif sont stockés dans un premier conteneur du la mémoire de stockage de contenus et constituent un premier contenu autonome ; et
- en réponse à la recherche, une obtention d'un premier traitement d'accès et du lien avec le premier traitement d'exécution respectif, une exécution du premier traitement d'accès par le premier traitement d'exécution respectif, le premier traitement d'exécution respectif étant stocké dans la couche de virtualisation parmi une pluralité de traitement d'exécution distincts, chacun des traitements d'exécution distincts étant associé avec au moins un contenu autonome stocké dans la mémoire de stockage de contenus, le premier traitement d'exécution respectif étant adapté à exécuter le premier traitement d'accès du premier contenu autonome en utilisant la couche d'abstraction matérielle du premier lecteur de contenu.

Ainsi, les échanges sont réduits puisque le procédé de stockage comporte directement l'accès au contenu dans la mémoire au lieu de commander un dispositif d'accès dans une mémoire.

Avantageusement, l'exécution du traitement d'accès est mise en œuvre par un traitement d'exécution associé au contenu autonome sur la couche d'abstraction matérielle du lecteur de contenus mise en œuvre par le processeur du lecteur de contenus.

Avantageusement, selon une implémentation de l'invention, un procédé de gestion de contenus comporte un procédé de stockage selon l'invention et un procédé de consultation selon l'invention.

Avantageusement, selon une implémentation de l'invention, les différentes étapes du procédé selon l'invention sont mises en œuvre par un logiciel ou programme d'ordinateur, ce logiciel comprenant des instructions logicielles destinées à être exécutées par un processeur de données d'un lecteur de contenus et étant conçus pour commander l'exécution des différentes étapes de ce procédé.

L'invention vise donc aussi un programme comprenant des instructions de code de programme pour l'exécution des étapes du procédé de stockage et/ou du procédé de consultation et/ou du procédé de gestion lorsque le programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est également un lecteur de contenus comportant une première mémoire de stockage de contenus, une couche de virtualisation, une couche d'abstraction matérielle, et un processeur mettant en œuvre le procédé de stockage selon l'invention.

Un objet de l'invention est également un lecteur de contenus comportant une première mémoire de stockage de contenus, une couche de virtualisation, une couche d'abstraction matérielle, et un processeur mettant en œuvre le procédé de consultation selon l'invention.

Un objet de l'invention est également un lecteur de contenus comportant une première mémoire de stockage de contenus, une couche de virtualisation, une couche d'abstraction matérielle, et un processeur mettant en œuvre le procédé de gestion selon l'invention.

Avantageusement, la première mémoire de stockage de contenus est une mémoire externe au lecteur de contenus connectée audit lecteur de contenus lors de la mise en œuvre du procédé de stockage.

Les caractéristiques et avantages de l'invention apparaîtront plus clairement à la lecture de la description, faite à titre d'exemple, et des figures s'y rapportant qui représentent :
- Figures 1a et 1b, des schémas simplifiés d'un procédé de stockage selon l'invention, respectivement d'une partie du procédé de stockage comportant notamment la génération de contenus autonomes, et d'une autre partie du procédé de stockage comportant un transfert d'un contenu d'une première mémoire à une deuxième mémoire ;
- Figure 2, un schéma simplifié d'un procédé de consultation selon l'invention ;
- Figure 3, un lecteur de contenu mettant en œuvre au moins un des procédés de stockage ou de consultation selon l'invention ;
- Figures 4a et 4b, des schémas d'une architecture selon l'invention, respectivement de l'architecture fonctionnelle et du lien entre le contenu autonome et le lecteur de contenu.

Le propos de l'invention est de garantir que les contenus stockés restent accessibles dans le temps c'est-à-dire dans 10, 20, 30 ans ou plus. Par accessible est entendu consultable pour le lecteur simple mais aussi modifiable pour des modifications de types : corrections, commentaires, etc.

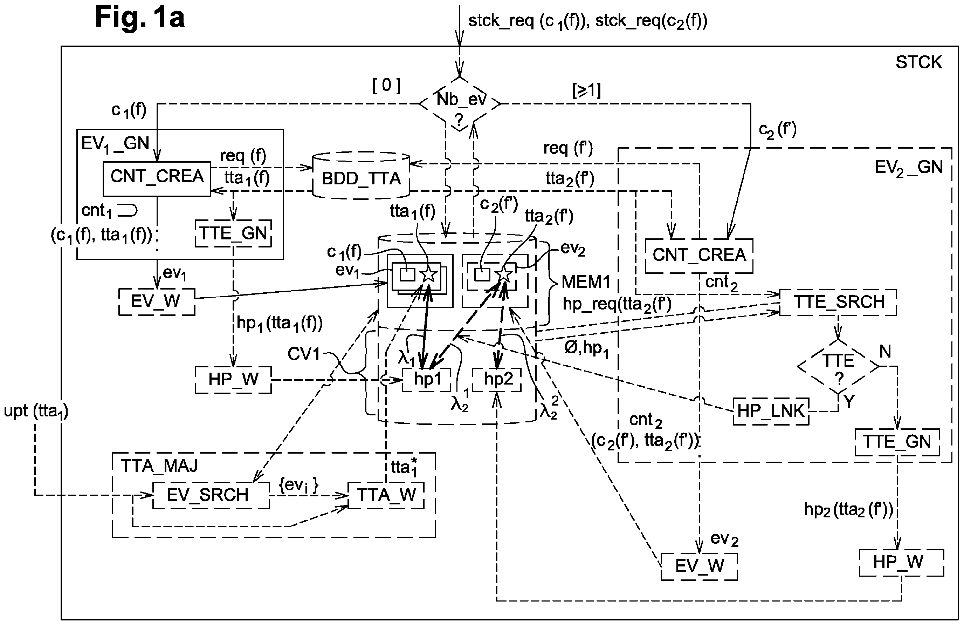

La figure 1a illustre un schéma simplifié d'un procédé de stockage selon l'invention, en particulier d'une partie du procédé de stockage comportant notamment la génération de contenus autonomes.

Le procédé de stockage de contenus est mis en œuvre par un premier lecteur de contenus, le premier lecteur de contenus comportant un processeur, une première mémoire de stockage de contenus MEM1, une couche de virtualisation CV1 et une couche d'abstraction matérielle.

Le procédé de stockage comporte, lors du stockage STCK d'un premier contenu d'un format donné c1(f), une génération d'un premier contenu autonome EV1_GN suite à laquelle le premier contenu autonome ev1 sera stocké dans la première mémoire MEM1. La génération du premier contenu autonome EV1_GN comporte une création CNT_CREA d'un premier conteneur cnt1 dans lequel sont stockés des données comportant au moins :
- le premier contenu à stocker dans le format donné c1(f), et
- un premier traitement d'accès tta1(f) adapté au format donné et associé au premier contenu à stocker.

Les données stockées dans le premier conteneur cnt1 constituent le premier contenu autonome ev1.

Le premier contenu autonome ev1 est dit autonome car il permet à un lecteur de contenu d'accéder au premier contenu c1(f) qu'il comporte même si le lecteur de contenu ne dispose pas d'un premier traitement d'accès adapté au format f du premier contenu f. En effet, le lecteur de contenu lisant le premier contenu autonome exécutera le traitement d'accès tta1(f) inscrit dans le premier contenu autonome ev1 pour accéder à ce premier contenu c1(f). Pour cette raison, un contenu autonome peut aussi être nommé « environnement virtuel d'exécution » puisqu'il permet l'exécution de ce traitement d'accès même s'il n'est disponible dans le lecteur de contenu.

Le contenu autonome comportant le traitement d'accès à son contenu, l'accès au contenu stocké est alors garanti quel que soit le lecteur de contenu, tant que celui-ci est apte à mettre en œuvre le traitement d'accès stocké en association avec le contenu dans le contenu autonome.

Plusieurs premiers contenus c1 peuvent ainsi être stockés sous forme de plusieurs premiers contenus autonomes ev1 dans différents premiers conteneurs cnt1 dans la première mémoire MEM1.

En particulier, une requête de stockage d'un contenu stck_req(c1(f)), stck_req(c2(f')) dans la première mémoire du premier lecteur de contenu est reçue. Notamment, le procédé de stockage STCK comporte une réception de cette requête de stockage d'un contenu STCK_RC (non illustrée). Eventuellement, la requête de stockage d'un contenu stck_req(c1(f)), stck_req(c2(f')) déclenche le procédé de stockage STCK.

En particulier, lors de la création du premier conteneur cnt1, le traitement d'accès tta1(f) adapté au format du premier contenu c1(f) est soit recherché TTTA_SRCH (non illustré) dans une base de données de traitement d'accès BDD_TTA, soit fourni avec le contenu c1(f) par un procédé de création de contenus C_CREA (non illustré) fournissant le premier contenu c1(f). Dans le cas de la recherche dans une base de données, la création de contenu CNT_CREA émet notamment une requête de traitement d'accès en fonction du format du premier contenu req(f) à destination d'au moins une base de traitement d'accès BDD_TTA qui lui fournit en réponse le traitement d'accès ad hoc, en l'occurrence un premier traitement d'accès tta1(f).

En particulier, le procédé de stockage STCK comporte une écriture EV_W, dans la première mémoire MEM1, du premier contenu autonome ev1.

En particulier, le procédé de stockage STCK comporte, lors de la génération d'un premier contenu autonome EV1_GN, une génération de traitement d'exécution TTE_GN fournissant un premier traitement d'exécution adapté à une exécution d'un premier traitement d'accès du premier contenu autonome tta1(f) sur la couche d'abstraction matérielle. Le traitement d'exécution généré, soit le premier traitement d'exécution hp1(tta1(f)) dans le cas du premier traitement d'accès, est stocké HP_W dans la couche de virtualisation CV1 en association avec le premier contenu autonome ev1.

Le traitement d'exécution permet à un lecteur de contenu d'exécuter directement le traitement d'accès d'un contenu autonome sur sa couche d'abstraction matérielle lors de l'accès au contenu du contenu autonome. Pour cette raison, le traitement d'exécution peut aussi être nommé « hyperviseur».

Ainsi, la garanti d'accès au contenu quel que soit le lecteur de contenu est améliorée grâce au traitement d'exécution puisqu'il exécute le traitement d'accès du contenu autonome directement sur la couche d'abstraction matérielle.

Sur la figure 1a, l'association entre le premier contenu autonome ev1 et le premier traitement d'exécution hp1 est illustré par un lien λ1. Ce lien λ1 est notamment stocké sur la première mémoire dans le premier conteneur cnt1. Le premier contenu autonome ev1 est alors constitué non seulement du premier contenu c1, du premier traitement d'accès tta1, mais aussi du lien vers le premier traitement d'exécution hp1.

Ainsi, lorsqu'un accès au premier contenu c1 est requis, cette requête déclenche l'exécution, par le premier traitement d'exécution hp1 grâce au lien λ1 du premier contenu autonome ev1 comportant le premier contenu c1 vers ce premier traitement d'exécution hp1, du premier traitement d'accès tta1 de ce premier contenu autonome ev1 pour accéder au premier contenu c1, notamment pour consulter et/ou modifier et/ou imprimer, etc. le premier contenu.

En particulier, le procédé de stockage STCK détermine Nb_ev ? si au moins un contenu autonome ev est déjà stocké dans la première mémoire notamment suite à une requête de stockage d'un contenu c. Ainsi, si aucun contenu autonome n'est stocké [0], le procédé de stockage procède à la génération d'un premier contenu autonome EV1_GN, sinon [≥1], le procédé de stockage STCK procède à la génération d'un deuxième contenu autonome EV2_GN.

La génération d'un deuxième contenu autonome EV2_GN peut être au moins en partie identique à la génération d'un premier contenu autonome EV1_GN, c'est-à-dire comporter aussi une création d'un conteneur CNT CREA, en l'occurrence d'un deuxième conteneur cnt2. Dans ce deuxième conteneur cnt2 sont stockés des données comportant au moins :
- le deuxième contenu à stocker c2(f') dans un format donné f', éventuellement différent du format f du premier contenu c1, et
- un deuxième traitement d'accès tta2(f') adapté au format donné f' et associé au deuxième contenu à stocker c2.

Les données stockées dans le deuxième conteneur cnt2 constituent le deuxième contenu autonome ev2.

Plusieurs deuxièmes contenus c2 peuvent ainsi être stockés sous forme de plusieurs deuxièmes contenus autonomes ev2 dans différents deuxièmes conteneurs cnt2 dans la première mémoire MEM1.

En particulier, lors de la création du deuxième conteneur cnt2, le traitement d'accès tta2(f') adapté au format du deuxième contenu c2(f') est soit recherché TTTA_SRCH (non illustré) dans une base de données de traitement d'accès BDD_TTA, soit fourni avec le contenu c2(f') par un procédé de création de contenus C_CREA (non illustré) fournissant le deuxième contenu c2(f'). Dans le cas de la recherche dans une base de données, la création de contenu CNT_CREA émet notamment une requête de traitement d'accès en fonction du format du deuxième contenu req(f') à destination d'au moins une base de traitement d'accès BDD TTA qui lui fournit en réponse le traitement d'accès ad hoc, en l'occurrence un deuxième traitement d'accès tta2(f').

En particulier, le procédé de stockage STCK comporte, lors d'une génération d'un deuxième contenu autonome EV2_GN, une recherche TTE_SRCH d'un traitement d'exécution fournissant un premier traitement d'exécution adapté à une exécution d'un premier traitement d'accès du deuxième contenu autonome ev2 sur la couche d'abstraction matérielle du premier lecteur.

Par exemple, la recherche TTE_SRCH émet notamment une requête de traitement d'exécution en fonction du traitement d'accès du deuxième contenu autonome hp_req(tta2(f')) à destination de la première couche de virtualisation CV1 qui lui fournit en réponse une information concernant le traitement d'exécution ad hoc s'il y est stocké (par exemple, un identifiant du et/ou une adresse vers et/ou un lien vers le traitement d'exécution ad hoc stocké), dans notre exemple le premier traitement d'exécution hp1, sinon une information ∅ d'absence de traitement d'exécution ad hoc dans la couche de virtualisation.

Notamment, le procédé de stockage STCK peut déterminer TTE ? si le lecteur de contenu dispose déjà d'un traitement d'exécution permettant l'exécution du traitement d'accès du deuxième contenu autonome sur sa couche d'abstraction matérielle, par exemple en fonction des résultats de la recherche TTE_SRCH. Cette détermination TTE ? permet au procédé de stockage STCK d'optimiser à la fois la garanti d'accès au contenu stocké et les ressources du lecteur de contenus. En effet, le procédé de stockage STCK peut ainsi décider en fonction de l'existence Y ou non N d'un traitement d'exécution ad hoc pour le deuxième contenu autonome, respectivement de d'une association avec le deuxième contenu autonome du traitement d'exécution existant HP_LNK (par exemple fourni par la recherche TTE_SRCH, notamment sous la forme d'un identifiant et/ou d'une adresse et/ou d'un lien, etc.) ou de la génération d'un deuxième traitement d'exécution adapté TTE_GN.

En particulier, le procédé de stockage STCK comporte, le cas échéant, une association HP LNK avec le deuxième contenu autonome ev2 du traitement d'exécution hp1 résultant de la recherche et déjà stocké dans la couche de virtualisation.

L'association entre le deuxième contenu autonome ev2 et le premier traitement d'exécution hp1 est illustré, à titre d'exemple, par un lien λ₂¹. Ce lien λ₂¹ est notamment stocké sur la première mémoire dans le deuxième conteneur cnt2. Le deuxième contenu autonome ev2 est alors constitué non seulement du deuxième contenu c2, du deuxième traitement d'accès tta2, mais aussi du lien λ₂¹ vers le premier traitement d'exécution hp1.

Dans le cas d'une détermination de la non-existence N d'un traitement d'exécution ad hoc pour le deuxième contenu autonome ev2, le procédé de stockage comporte une génération de traitement d'exécution TTE_GN fournissant un deuxième traitement d'exécution adapté à une exécution du deuxième traitement d'accès du deuxième contenu autonome tta2(f') sur la couche d'abstraction matérielle. Le traitement d'exécution généré, soit le deuxième traitement d'exécution hp2(tta2(f')) dans le cas du deuxième traitement d'accès, est stocké HP_W dans la couche de virtualisation CV1 en association avec le deuxième contenu autonome ev2.

L'association entre le deuxième contenu autonome ev2 et le deuxième traitement d'exécution hp2 est illustré par un lien λ₂². Ce lien λ₂² est notamment stocké sur la première mémoire dans le deuxième conteneur cnt2. Le deuxième contenu autonome ev2 est alors constitué non seulement du deuxième contenu c2, du deuxième traitement d'accès tta2, mais aussi du lien vers le deuxième traitement d'exécution hp2.

En particulier, le procédé de stockage STCK comporte, lors d'une modification, sur le premier lecteur de contenus, d'un traitement d'accès upt(tta1), une mise à jour TTA_MAJ, en fonction du traitement d'accès modifié, d'au moins un traitement d'accès tta1, tta2 associé à un contenu c1, c2 d'un contenu autonome ev1, ev2 stocké sur la première mémoire MEM1.

La mise à jour de traitement d'accès TTA_MAJ comporte, en particulier, une recherche EV_SRCH dans la première mémoire MEM1 des contenus autonomes ayant un traitement d'accès associé correspondant au traitement d'accès modifié, par exemple le premier traitement d'accès tta1. Cette recherche EV_SRCH de contenus autonomes à mettre à jour est notamment déclenchée par une commande de modification, sur le premier lecteur de contenus, d'un traitement d'accès upt(tta1). La recherche des contenus autonomes à mettre à jour EV_SRCH fournit par exemple une liste des contenus autonomes concernés {evᵢ} par exemple sous la forme d'une liste d'adresses mémoires, de liens vers ces contenus autonomes, etc.

En particulier, la mise à jour de traitement d'accès TTA_MAJ comporte une écriture soit du traitement d'accès modifié soit de la modification du traitement d'accès TTA_W dans les contenus autonomes ev1, ev2 comportant un traitement d'accès affecté par la modification (notamment indiqué par la recherche de contenus autonomes à mettre à jour EV _SRCH). Dans l'exemple de la figure 1a, le traitement d'accès modifié étant le premier traitement d'accès tta1, l'écriture vient enregistrer soit la modification tta1* avec le premier traitement d'accès tta1, soit le traitement tta1* modifié dans le premier conteneur cnt1 du premier contenu autonome ev1.

Le fait que la mise à jour du traitement d'accès puisse s'exécuter sur le traitement d'exécution est important et n'est pas trivial.

Dans le cas où le traitement d'accès modifié tta1* nécessite pour accéder au contenu c1 une utilisation d'un processeur graphique (GPU) du lecteur,
- soit le traitement d'accès d'origine tta1 s'exécute sur un traitement d'exécution n'offrant pas une utilisation d'un processeur graphique (GPU) de l'ordinateur, le traitement d'exécution hp devra alors être aussi modifié pour que le traitement modifié tta1* s'exécutant sur le traitement d'exécution modifié hp* (non illustré) s'exécute sur le processeur graphique ;
- soit le traitement d'exécution hp émule le processeur graphique et dans ce cas la modification du traitement d'accès n'a pas d'impact sur le traitement d'exécution.

L'environnement d'exécution c'est-à-dire le traitement d'exécution n'est donc, généralement, pas impacté par la modification des traitements d'accès du lecteur hôte, il n'y a donc pas d'impact sur la propriété de durabilité du contenu.

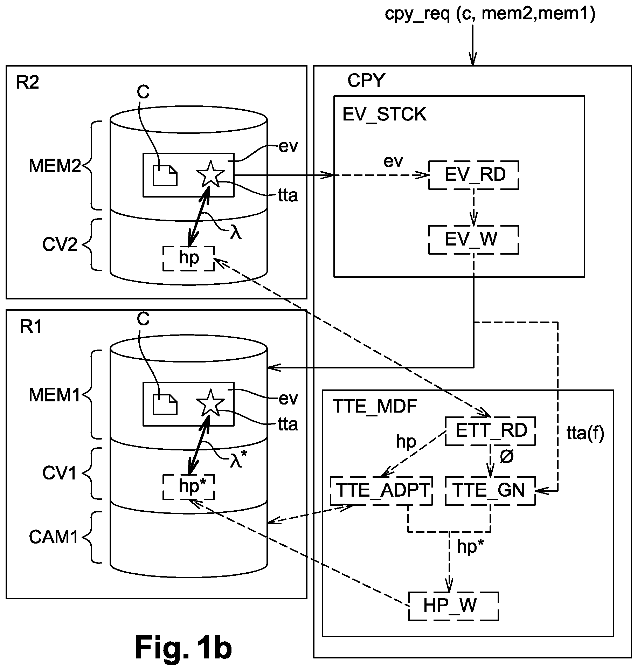

La figure 1b illustre un schéma simplifié d'un procédé de stockage selon l'invention, en particulier d'une autre partie du procédé de stockage comportant un transfert d'un contenu d'une première mémoire à une deuxième mémoire.

En particulier, lors d'une copie CPY, sur la première mémoire de stockage de contenus MEM1 du premier lecteur de contenus R1, d'un contenu c d'un contenu autonome ev stocké dans une deuxième mémoire de stockage de contenus MEM2 d'un deuxième lecteur de contenus R2, le procédé de stockage comporte :
- un stockage EV_STCK du contenu autonome du contenu à copier ev dans la première mémoire MEM1, et
- une modification TTE_MDF de la couche de virtualisation CV1 du premier lecteur de contenus R1 associant λ* à un traitement d'exécution hp * adapté à l'exécution, sur la couche d'abstraction matérielle CAM1 du premier lecteur R1, du traitement d'accès tta du contenu autonome ev du contenu copié c.

En particulier, la copie CPY du contenu c de la deuxième mémoire MEM2 sur la première mémoire MEM1 peut être déclenchée par une requête de copie cpy_req(c,mem2,mem1). Notamment, la copie CPY comporte une réception de requête de copie CPY_RC (non illustrée) qui commande le stockage EV_STCK du contenu autonome ev comportant le contenu c à copier dans la première mémoire MEM1.

En particulier, le stockage EV_STCK du contenu autonome ev comportant le contenu c à copier dans la première mémoire MEM1 comporte une lecture EV_RD du contenu autonome ev comportant le contenu c à copier dans la deuxième mémoire MEM2. Puis, le stockage EV_STCK du contenu autonome ev comporte une écriture EV_W du contenu autonome ev comportant le contenu c à copier dans la première mémoire MEM1.

En particulier, la modification de la couche de virtualisation TTE_MDF comporte une génération de traitement d'exécution TTE_GN fournissant un traitement d'exécution hp* adapté à une exécution du traitement d'accès tta du contenu autonome ev sur la couche d'abstraction matérielle CAM1 du premier lecteur R1. Le traitement d'exécution généré hp* est stocké HP_W dans la couche de virtualisation CV1 du premier lecteur R1 en association I* avec le contenu autonome ev.

En particulier, la modification de la couche de virtualisation TTE_MDF comporte une lecture de traitement d'exécution TTE_RD fournissant un traitement d'exécution hp lu sur la couche de virtualisation CV2 du deuxième lecteur R2. Le traitement d'exécution lu hp est adapté à une exécution du traitement d'accès tta du contenu autonome ev sur la couche d'abstraction matérielle CAM2 du deuxième lecteur R2. Puis, la modification de la couche de virtualisation TTE_MDF comporte une adaptation du traitement d'exécution TTE_ADPT qui modifie le traitement d'exécution lu hp en fonction de la couche d'abstraction matérielle CAM1 du premier lecteur R1 dans lequel le traitement d'exécution adapté hp* sera inscrit HP_W.

En particulier, la modification de la couche de virtualisation TTE_MDF comporte, suite à la lecture, sur la couche de virtualisation CV2 du deuxième lecteur R2, de traitement d'exécution TTE_RD associé au contenu autonome stocké ev, soit l'adaptation TTE_ADPT du traitement d'exécution lu hp soit la génération d'un traitement d'exécution TTE_GN. Notamment, si la lecture TTE_RD fournit un traitement d'exécution hp celui-ci est adapté TTE_ADPT, sinon ∅ (i.e. si aucun traitement d'exécution n'est disponible sur le deuxième lecteur R2 en association avec le contenu autonome ev à copier) un traitement d'exécution est généré TTE_GN.

En particulier, lors du transfert vers une première mémoire d'un contenu enregistré dans une deuxième mémoire, le contenu autonome ev contenant le contenu à copier c est effacé de la deuxième mémoire MEM2 après la copie CPY. Si un traitement d'exécution hp est associé au contenu autonome effacé, l'effacement du contenu autonome ev déclenche l'effacement au moins de l'association λ, voire du traitement d'exécution hp lorsque celui-ci n'est pas associé avec d'autre contenu autonome de la deuxième mémoire MEM2.

Par exemple, le procédé de stockage de la figure 1a peut être complété par les étapes de la figure 1b notamment lors du transfert vers une première mémoire d'un contenu enregistré dans une deuxième mémoire.

Ainsi, seul le traitement d'exécution est impacté par le transfert du contenu autonome d'une mémoire à une autre. Des techniques telles que la virtualisation imbriquée facilite le portage du traitement d'exécution, notamment sous forme d'hyperviseur, d'un lecteur hôte à un autre.

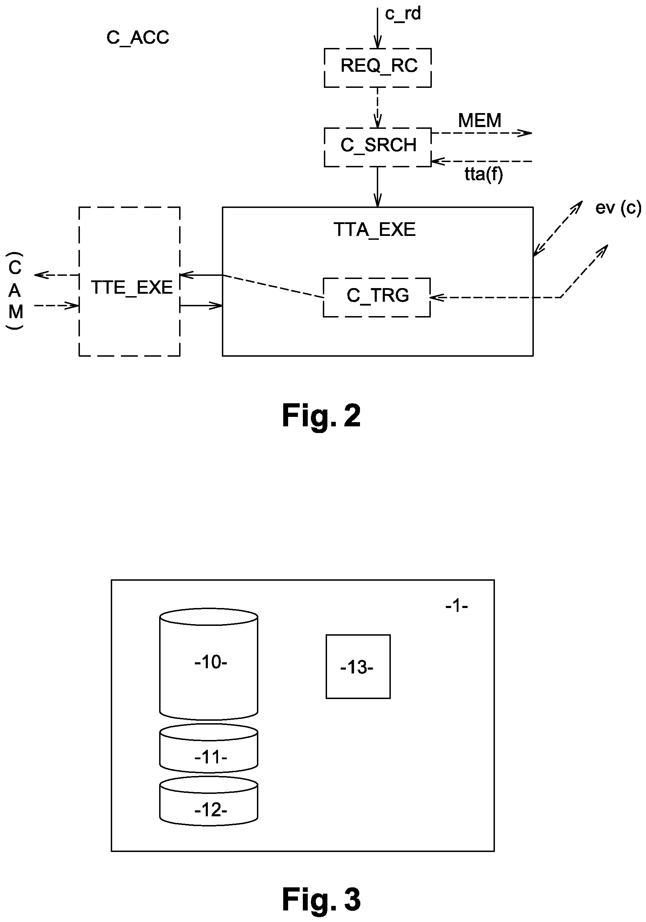

La figure 2 illustre un schéma simplifié d'un procédé de consultation selon l'invention.

Le procédé de consultation de contenus C_ACC est mis en œuvre par un lecteur de contenus R1, R2, le lecteur de contenus R1, R2 comportant un processeur, une mémoire de stockage de contenus MEM1, MEM2, une couche de virtualisation CV1, CV2 et une couche d'abstraction matérielle CAM1, CAM2. Le procédé de consultation C_ACC comporte, lors d'une réception REQ_RC d'une demande d'accès c_rd à un contenu d'un format donné stocké dans la mémoire MEM du lecteur de contenus, une exécution TTA_EXE d'un traitement d'accès tta(f) adapté au format donné associé au contenu stocké c. Le traitement d'accès tta(f) et le contenu c sont stockés dans un conteneur cnt de la mémoire MEM et constitue un contenu autonome ev.

En particulier, l'exécution du traitement d'accès TTA_EXE est mise en œuvre par un traitement d'exécution TTE_EXE associé au contenu autonome sur la couche d'abstraction matérielle CAM du lecteur de contenus mise en œuvre par le processeur du lecteur de contenus.

En particulier, l'exécution du traitement d'accès TTA_EXE comporte un accès au traitement d'accès tta(f) du contenu autonome ev du contenu c consulté qui déclenche TTE_TRG le traitement d'exécution associé au contenu autonome ev. La mise en œuvre du traitement d'exécution TTE_EXE comporte l'exécution des étapes du traitement d'accès tta(f) TTA_EXE sur la couche d'abstraction matérielle CAM. L'exécution des étapes du traitement d'accès tta(f) TTA_EXE comporte l'accès au contenu c du contenu autonome ev.

En particulier, le procédé de consultation C_ACC comporte une recherche C_SRCH du contenu c sur la mémoire MEM qui fournit en réponse le traitement d'accès tta(f) associé au contenu c dans le contenu autonome ev déclenchant l'exécution du traitement d'accès TTA_EXE.

Notamment, un procédé de gestion de contenus comporte un procédé de stockage selon l'invention et un procédé de consultation selon l'invention.

Un mode de réalisation d'au moins l'un des procédés selon l'invention : procédé de stockage, procédé de consultation, procédé de gestion de contenus, est un programme comprenant des instructions de code de programme pour l'exécution des étapes du procédé de stockage ou du procédé de consultation ou du procédé de gestion de contenus lorsque le programme est exécuté par un processeur.

La figure 3 illustre un lecteur de contenu mettant en œuvre au moins un des procédés de stockage ou de consultation selon l'invention.

Dans un premier mode de réalisation, le lecteur de contenus comporte une mémoire de stockage de contenus, une couche de virtualisation, une couche d'abstraction matérielle, et un processeur mettant en œuvre le procédé de stockage selon l'invention.

En particulier, le processeur met en œuvre le procédé de consultation selon l'invention.

Dans un premier mode de réalisation, le lecteur de contenus 1 comporte une mémoire de stockage de contenus 10, une couche de virtualisation 11, une couche d'abstraction matérielle 12, et un processeur 13 mettant en œuvre le procédé de gestion de contenus selon l'invention.

En particulier, la mémoire de stockage de contenus 10 est une mémoire externe au lecteur de contenus 1 connectée audit lecteur de contenus 1 lors de la mise en œuvre du procédé de stockage, quel que soit le mode de réalisation du lecteur de contenus 1.

En particulier, un dispositif de stockage 100 (non illustré) comporte la mémoire de stockage de contenus 10 et la couche de virtualisation 11. Le dispositif de stockage est, notamment, externe au lecteur de contenus 1 : par exemple une clé USB, un CD, un disque externe, un espace de stockage dans un réseau de communication (aussi nommé « cloud » en anglais).... Le dispositif externe de stockage est connecté audit lecteur de contenus 1 lors de la mise en œuvre du procédé de stockage, quel que soit le mode de réalisation du lecteur de contenus 1.

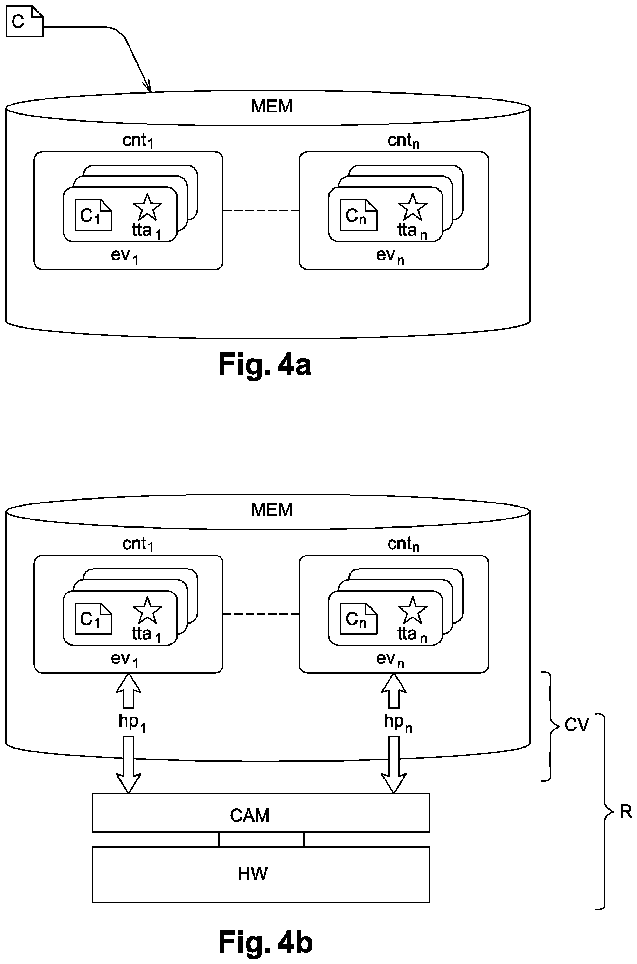

La figure 4a illustre un schéma de l'architecture fonctionnelle de l'invention.

Les contenus c, données utiles, sont intégrés dans une mémoire MEM d'un lecteur de contenu ou d'un dispositif de stockage externe. A l'intérieur de cette mémoire MEM, chaque contenu c₁... cₙ est inscrit dans un conteneur cnt₁...cntₙ. Chaque conteneur cnt₁...cntₙ prend donc en charge le stockage d'un contenu mais aussi l'exécution des fonctions de manipulation du contenu associé à ce contenu, c'est-à-dire le traitement d'accès tta₁...ttaₙ associé respectivement à chacun de ces contenus c₁... cₙ. Ces données, à savoir le contenu c₁... cₙ et le traitement d'accès associé tta₁...ttaₙ, constituent un contenu autonome ev : le conteneur cnt₁...cntₙ fournit donc un environnement d' exécution virtualisé servant de support à l'exécution des fonctions du traitement d'accès tta₁...ttaₙ lors de l'accès au contenu associé c₁... cₙ. La génération de contenus autonomes ev1 ...evₙ est prise en charge par le lecteur de contenu comportant la mémoire MEM ou connecté à celle-ci lors du stockage du contenu c₁... cₙ.

La figure 4b illustre un schéma de l'architecture illustrant le lien entre le contenu autonome et le lecteur de contenu.

Le contenu autonome ev1...evₙ, en particulier le traitement d'accès tta₁...ttaₙ du contenu autonome ev1...evₙ, s'exécute sur les ressources mises à disposition par le lecteur de contenu R hôte du dispositif de stockage comportant la mémoire MEM lors de la consultation du contenu c₁...cₙ du contenu autonome ev1...evₙ.

Le lecteur de contenu R comporte une couche de virtualisation CV permettant l'exécution du contenu autonome ev1...evₙ sur la couche d'abstraction matérielle CAM du lecteur hôte R. La couche de virtualisation CV permet la mise en œuvre du traitement d'exécution associé au contenu autonome ev1...evₙ qui exécute le traitement d'accès tta₁...ttaₙ du contenu autonome ev1...evₙ sur la couche d'abstraction matérielle CAM. La couche d'abstraction matérielle CAM étant mise en œuvre par un processeur de la couche matérielle HW du lecteur hôte R. La couche matérielle HW comporte notamment un ou plusieurs des dispositifs suivants : un processeur CPU, une mémoire morte, une mémoire vive, un espace de stockage ou mémoire MEM...

Dans un mode de réalisation particulier de l'invention, un contenu autonome ev a notamment la forme d'une machine virtuelle. Dans ce mode de réalisation particulier, le traitement d'exécution compatible avec le format de la machine virtuel constituant le contenu autonome est un hyperviseur. Alors garantir la capacité du lecteur R à exécuter le traitement d'accès associé à un contenu équivaut à garantir l'exécution de la machine virtuelle contenu autonome sur le lecteur hôte c'est-à-dire l'exécution de l'hyperviseur associé au contenu autonome sur la couche d'abstraction matérielle.

Or, de par sa structure de type exo voire nano-kernel, un hyperviseur est un traitement minimal dont la durabilité est beaucoup plus facile à garantir que celles des traitements d'accès associés aux contenus.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en œuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonction selon la description ci-dessus. Un composant matériel correspond à tout élément d'un ensemble matériel (ou hardware) apte à mettre en œuvre une fonction ou un ensemble de fonctions.

## Revendications

1. Procédé de stockage de contenus mis en œuvre par un premier lecteur de contenus, le premier lecteur de contenus comportant un processeur, une première mémoire de stockage de contenus (MEM1), une couche de virtualisation (CV1) et une couche d'abstraction matérielle, le procédé de stockage (STCK) comportant :
- une réception d'une requête de stockage (stck_req(c1(f))) d'un premier contenu d'un format donné (c1(f)),
- en réponse à la requête de stockage, une génération d'un premier contenu autonome (EV1_GN) comportant une création (CNT_CREA) d'un premier conteneur (cnt1) dans lequel sont stockés au moins le premier contenu à stocker dans le format donné (c1(f)), et un premier traitement d'accès (tta1(f)) adapté au format donné et associé au premier contenu à stocker, les données stockées dans le premier conteneur (cnt1) constituant le premier contenu autonome (ev1) ;
- une génération d'un premier traitement d'exécution (TTE_GN) stocké dans la couche de virtualisation (CV1) en association avec le premier contenu autonome (ev1), le premier traitement d'exécution (hp1) étant adapté à une exécution d'un premier traitement d'accès du premier contenu autonome (tta1(f)) sur la couche d'abstraction matérielle, le procédé étant **caractérisé en ce qu'**il comporte l'étape suivante :
- en réponse à une modification (TTE_MDF), sur le premier lecteur de contenus (R1), du premier traitement d'accès (tta1), une mise à jour (TTA_MAJ), en fonction du premier traitement d'accès modifié, d'au moins un premier traitement d'accès (tta1) associé à un premier contenu (c1) dans un premier conteneur d'un premier contenu autonome (ev1) stocké sur la première mémoire (MEM1).

2. Procédé de stockage selon la revendication précédente, **caractérisé en ce que** le procédé de stockage (STCK) comporte une écriture (EV_W), dans la première mémoire (MEM1), du premier contenu autonome (ev1).

3. Procédé de stockage selon la revendication 1, **caractérisé en ce que** le procédé de stockage (STCK) comporte, lors d'une génération (EV2_GN) d'un deuxième contenu autonome, une recherche (TTE_SRCH) d'un traitement d'exécution fournissant un premier traitement d'exécution adapté à une exécution d'un premier traitement d'accès du deuxième contenu autonome (ev2) sur la couche d'abstraction matérielle du premier lecteur.

4. Procédé de stockage selon la revendication précédente, **caractérisé en ce que** le procédé de stockage (STCK) comporte, le cas échéant, une association (HP_LNK) avec le deuxième contenu autonome (ev2) du traitement d'exécution (hp1) résultant de la recherche et déjà stocké dans la couche de virtualisation.

5. Procédé de stockage selon l'une quelconque des revendications 1 à 4, **caractérisé en ce que**, lors d'une copie (cPY), sur la première mémoire de stockage de contenus (MEM1) du premier lecteur de contenus (R1), d'un contenu autonome (ev) stocké dans une deuxième mémoire de stockage de contenus (MEM2) d'un deuxième lecteur de contenus (R2), le procédé de stockage (STCK)comporte :
• un stockage (EV_STCK) du contenu autonome du contenu à copier (ev) dans la première mémoire (MEM1), et
• une modification (TTE_MDF) de la couche de virtualisation (CV1) du premier lecteur de contenus (R1) associant un traitement d'exécution (hp*) adapté à l'exécution du traitement d'accès (tta) du contenu autonome (ev) du contenu copié (c) sur la couche d'abstraction matérielle (CAM1) du premier lecteur (R1).

6. Procédé de consultation de contenus mis en œuvre par un lecteur de contenus (R1), le lecteur de contenus (R1) comportant un processeur, une mémoire de stockage de contenus (EME1), une couche de virtualisation (CV1) et une couche d'abstraction matérielle (CAM1), le procédé de consultation (C_ACC) comporte :
- lors d'une réception (REQ_RC) d'une demande d'accès (c_rd) à un premier contenu d'un format donné stocké dans la première mémoire (MEM1) du premier lecteur de contenus, une recherche (C_SRCH) du premier contenu (c1) demandé dans la mémoire de stockage de contenus (EME1), dans laquelle un premier traitement d'accès adapté au format donné (tta1(f)) est associé avec le premier contenu demandé (c1), et dans laquelle le premier traitement d'accès, le premier contenu et un lien avec un premier traitement d'exécution respectif sont stockés dans un premier conteneur du la mémoire de stockage de contenus et constituent un premier contenu autonome (ev1); et
- en réponse à la recherche, une obtention d'un premier traitement d'accès et du lien avec le premier traitement d'exécution respectif, une exécution (TTA_EXE) du premier traitement d'accès (tta1(f)) par le premier traitement d'exécution respectif, le premier traitement d'exécution respectif étant stocké dans la couche de virtualisation parmi une pluralité de traitement d'exécution distincts, chacun des traitements d'exécution distincts étant associé avec au moins un contenu autonome stocké dans la mémoire de stockage de contenus, le premier traitement d'exécution respectif étant adapté à exécuter le premier traitement d'accès du premier contenu autonome en utilisant la couche d'abstraction matérielle du premier lecteur de contenu .

7. Procédé de consultation selon la revendication précédente, **caractérisé en ce que** l'exécution (TTA_EXE) du traitement d'accès est mise en œuvre par un traitement d'exécution associé au contenu autonome sur la couche d'abstraction matérielle du lecteur de contenus mise en œuvre par le processeur du lecteur de contenus.

8. Procédé de gestion de contenus comportant un procédé de stockage selon l'une quelconque des revendications 1 à 5 et un procédé de consultation selon l'une quelconque des revendications 6 ou 7.

9. Programme comprenant des instructions de code de programme pour l'exécution des étapes du procédé de stockage selon l'une quelconque des revendications 1 à 5 ou du procédé de consultation selon l'une quelconque des revendications 6 ou 7 ou du procédé de gestion de contenus selon la revendication précédente lorsque le programme est exécuté par un processeur.

10. Lecteur de contenus (1) comportant une première mémoire de stockage de contenus (10), une couche de virtualisation (11), une couche d'abstraction matérielle (12), et un processeur (13) mettant en œuvre le procédé de stockage selon l'une quelconque des revendications 1 à 5.

11. Lecteur de contenus selon la revendication précédente, **caractérisé en ce que** le processeur met en œuvre le procédé de consultation selon l'une quelconque des revendications 6 ou 7.

12. Lecteur de contenus comportant une première mémoire de stockage de contenus, une couche de virtualisation, une couche d'abstraction matérielle, et un processeur mettant en œuvre le procédé de gestion de contenus selon la revendication 8.

13. Lecteur de contenus selon la revendication 10, **caractérisé en ce que** la première mémoire de stockage de contenus est une mémoire externe au lecteur de contenus connectée audit lecteur de contenus lors de la mise en œuvre du procédé de stockage.

## Patentansprüche

1. Verfahren zur Speicherung von Inhalten, das durch einen ersten Inhaltsleser umgesetzt wird, wobei der erste Inhaltsleser einen Prozessor, einen ersten Inhaltsspeicher (MEM1), eine Virtualisierungs-schicht (CV1) und eine materielle Abstraktionsschicht umfasst, wobei das Speicherverfahren (STCK) Folgendes umfasst:
- Empfangen einer Speicherungsanfrage (stck_req(c1(f))) eines ersten Inhalts eines gegebenen Formats (c1-(f)),
- als Antwort auf die Speicherungsanfrage Erzeugen eines ersten autonomen Inhalts (EV1_GN), der ein Erzeugen (CNT_CREA) eines ersten Containers (cnt1) umfasst, in dem mindestens der zu speichernde erste Inhalt im gegebenen Format (c1(f)) gespeichert wird, und einer ersten Zugangsverarbeitung (ttal(f)), die für das gegebene Format geeignet ist und mit dem zu speichernden ersten Inhalt verknüpft ist, wobei die im ersten Container (cnt1) gespeicherten Daten den ersten autonomen Inhalt (ev1) bilden;
- Erzeugen einer ersten Ausführungsverarbeitung (TTE_GN), die in der Virtualisierungsschicht (CV1) in Verbindung mit dem ersten autonomen Inhalt (ev1) gespeichert wird, wobei die erste Ausführungsverarbeitung (hp1) für eine Ausführung einer ersten Zugangsverarbeitung des autonomen ersten Inhalts (tta1(f)) in der materiellen Abstraktionsschicht geeignet ist, wobei das Verfahren **dadurch gekennzeichnet ist, dass** es den folgenden Schritt umfasst:
- als Antwort auf eine Änderung (TTE_MDF) der ersten Zugangsverarbeitung (tta1) im ersten Inhaltsleser (R1) Aktualisieren (TTA_MAJ) mindestens einer ersten Zugangsverarbeitung (tta1), die mit einem ersten Inhalt (c1) in einem ersten Container eines ersten autonomen Inhalts (ev1) verknüpft ist, der im ersten Speicher (MEM1) gespeichert ist, in Abhängigkeit von der geänderten ersten Zugangsverarbeitung.

2. Verfahren zur Speicherung nach dem vorhergehenden Anspruch, **dadurch gekennzeichnet, dass** das Speicherverfahren (STCK) ein Schreiben (EV_W) des ersten autonomen Inhalts (ev1) in den ersten Speicher (MEM1) umfasst.

3. Verfahren zur Speicherung nach dem Anspruch 1, **dadurch gekennzeichnet, dass** das Speicherverfahren (STCK) beim Erzeugen (EV2_GN) eines zweiten autonomen Inhalts Suchen (TTE_SRCH) einer Ausführungsverarbeitung umfasst, die eine erste Ausführungsverarbeitung bereitstellt, die für eine Ausführung einer ersten Zugangsverarbeitung des autonomen zweiten Inhalts (ev2) in der materiellen Abstraktionsschicht des ersten Lesers geeignet ist.

4. Verfahren zur Speicherung nach dem vorhergehenden Anspruch, **dadurch gekennzeichnet, dass** das Speicherverfahren (STCK) gegebenenfalls eine Verknüpfung (HP_LNK) mit dem zweiten autonomen Inhalt (ev2) der Ausführungsverarbeitung umfasst, der aus der Suche resultiert und schon in der Virtualisierungsschicht gespeichert ist.

5. Verfahren zur Speicherung nach einem der Ansprüche 1 bis 4, **dadurch gekennzeichnet, dass** beim Kopieren (cPY) eines autonomen Inhalts (ev), der in einem zweiten Inhaltsspeicher (MEM2) eines zweiten Inhaltslesers (R2) gespeichert ist, in den ersten Inhaltsspeicher (MEM1) des ersten Inhaltslesers (R1) das Verfahren zur Speicherung (STCK) Folgendes umfasst:
• Speichern (EV_STCK) des zu kopierenden autonomen Inhalts (ev) in den ersten Speicher (MEM1) und
• Ändern (TTE_MDF) der Virtualisierungsschicht (CV1) des ersten Inhaltslesers (R1), der eine geeignete Ausführungsverarbeitung (hp*) zuordnet, die für die Ausführung der Zugangsverarbeitung (tta) des autonomen Inhalts (ev) des kopierten Inhalts (c) in der materiellen Abstraktionsschicht (CAM1) des ersten Lesers (R1) geeignet ist.

6. Verfahren zur Abfrage von Inhalten, das durch einen Inhaltsleser (R1) umgesetzt wird, wobei der Inhaltsleser (R1) einen Prozessor, einen Inhaltsspeicher (EME1), eine Virtualisierungsschicht (CV1) und eine materielle Abstraktionsschicht (CAM1) umfasst, wobei das Verfahren zur Abfrage (C_ACC) Folgendes umfasst:
- bei Empfang (REQ_RC) einer Anfrage für den Zugang (c_rd) zu einem ersten Inhalt eines gegebenen Formats, der in einem ersten Speicher (MEM1) des ersten Inhaltslesers gespeichert ist, Suchen (C_SRCH) des verlangten ersten Inhalts (c1) im Inhaltsspeicher (EME1), in dem eine erste Zugangsverarbeitung, die für das gegebene Format geeignet ist (ttal(f)), mit dem verlangten ersten Inhalt (c1) verknüpft ist und in dem die erste Zugangsverarbeitung, der erste Inhalt und eine Verbindung zu einer jeweiligen ersten Ausführungsverarbeitung in einem ersten Container des Inhaltsspeichers gespeichert sind und einen ersten autonomen Inhalt (ev1) bilden; und
- als Antwort auf die Suche Erhalten einer ersten Zugangsverarbeitung und der Verbindung zur jeweiligen ersten Ausführungsverarbeitung, Ausführen (TTA_EXE) der ersten Zugangsverarbeitung (tta1(f)) durch die jeweilige erste Ausführungsverarbeitung, wobei die jeweilige erste Ausführungsverarbeitung unter einer Vielzahl gesonderter Ausführungsverarbeitungen in der Virtualisierungsschicht gespeichert ist, wobei jede der gesonderten Ausführungsverarbeitungen mit mindestens einem im Inhaltsspeicher gespeicherten autonomen Inhalt verknüpft ist, wobei die jeweilige erste Ausführungsverarbeitung dafür geeignet ist, die erste Zugangsverarbeitung des ersten autonomen Inhalts auszuführen, indem sie die materielle Abstraktionsschicht des ersten Inhaltslesers nutzt.

7. Verfahren zur Abfrage nach dem vorhergehenden Anspruch, **dadurch gekennzeichnet, dass** das Ausführen (TTA_EXE) der Zugangsverarbeitung durch eine Ausführungsverarbeitung umgesetzt wird, die mit dem autonomen Inhalt in der materiellen Abstraktionsschicht des Inhaltslesers verknüpft ist, die durch den Prozessor des Inhaltslesers umgesetzt wird.

8. Verfahren zur Abfrage von Inhalten, das ein Verfahren zur Speicherung nach einem der Ansprüche 1 bis 5 und ein Verfahren zur Abfrage nach einem der Ansprüche 6 oder 7 umfasst.

9. Programm, das Programmcodeanweisungen für die Ausführung der Schritte des Verfahrens zur Speicherung nach einem der Ansprüche 1 bis 5 oder des Verfahrens zur Abfrage nach einem der Ansprüche 6 oder 7 oder des Verfahrens zur Verwaltung von Inhalten nach dem vorhergehenden Anspruch umfasst, wenn das Programm durch einen Prozessor ausgeführt wird.

10. Inhaltsleser (1), der einen ersten Inhaltsspeicher (10), eine Virtualisierungsschicht (11), eine materielle Abstraktionsschicht (12) und einen Prozessor (13) umfasst, der das Verfahren zur Speicherung nach einem der Ansprüche 1 bis 5 umsetzt.

11. Inhaltsleser nach dem vorhergehenden Anspruch, **dadurch gekennzeichnet, dass** der Prozessor das Verfahren zur Abfrage nach einem der Ansprüche 6 oder 7 umsetzt.

12. Inhaltsleser, der einen ersten Inhaltsspeicher, eine Virtualisierungsschicht, eine materielle Abstraktionsschicht und einen Prozessor umfasst, der das Verfahren zur Verwaltung von Inhalten nach Anspruch 8 umsetzt.

13. Inhaltsleser nach Anspruch 10, **dadurch gekennzeichnet, dass** der erste Inhaltsspeicher ein zum Inhaltsleser externer Speicher ist, der bei der Umsetzung des Verfahrens zur Speicherung mit dem Inhaltsleser verbunden wird.

## Claims

1. Method for storing contents implemented by a first content reader, the first content reader comprising a processor, a first content storage memory (MEM1), a virtualization layer (CV1) and a hardware abstraction layer, the storage method (STCK) comprising:
- a reception of a storage request (stck_req(c1(f))) for a first content of a given format (c1(f)),
- in response to the storage request, a generation of a first autonomous content (EV1_GN) comprising a creation (CNT_CREA) of a first container (cnt1) in which are stored at least the first content to be stored in the given format (c1(f)), and a first access processing (tta1(f)) adapted to the given format and associated with the first content to be stored, the data stored in the first container (cnt1) constituting the first autonomous content (ev1) ;
- a generation of a first execution processing (TTE_GN) stored in the virtualization layer (CV1) in association with the first autonomous content (ev1), the first execution processing (hp1) being adapted to an execution of a first access processing of the first autonomous content (tta1(f)) on the hardware abstraction layer,
the method being **characterized in that** it comprises the following step:
- in response to a modification (TTE_MDF), on the first content reader (R1), of the first access processing (tta1), an update (TTA_MAJ) as a function of the modified first access processing, of at least a first access processing (tta1) associated with a first content (c1) in a first container of a first autonomous content (ev1) stored on the first memory (MEM1) .

2. Storage method according to the preceding claim, **characterized in that** the storage method (STCK) comprises a writing (EV_W), in the first memory (MEM1), of the first autonomous content (ev1).

3. Storage method according to claim 1, **characterized in that** the storage method (STCK) comprises, upon a generation (EV2_GN) of a second autonomous content, a search (TTE_SRCH) for an execution processing supplying a first execution processing adapted to an execution of a first access processing of the second autonomous content (ev2) on the hardware abstraction layer of the first reader.

4. Storage method according to the preceding claim, **characterized in that** the storage method (STCK) comprises, if necessary, an association (HP_LNK) with the second autonomous content (ev2) of the execution processing (hp1) resulting from the search and already stored in the virtualization layer.

5. Storage method according to any one of Claims 1 to 4, **characterized in that**, upon a copying (cPY), on the first content storage memory (MEM1) of the first content reader (R1), of an autonomous content (ev) stored in a second content storage memory (MEM2) of a second content reader (R2), the storage method (STCK) comprises:
• a storage (EV_STCK) of the autonomous content of the content to be copied (ev) in the first memory (MEM1), and
• a modification (TTE_MDF) of the virtualization layer (CV1) of the first content reader (R1) associating an execution processing (hp*) adapted to the execution of the access processing (tta) of the autonomous content (ev) of the copied content (c) on the hardware abstraction layer (CAM1) of the first reader (R1).

6. Content consultation method implemented by a content reader (R1), the content reader (R1) comprising a processor, a content storage memory (EME1), a virtualization layer (CV1) and a hardware abstraction layer (CAM1), the consultation method (C_ACC) comprises:
- upon a reception (REQ_RC) of a first access request (c_rd) to a first content of a given format stored in the first memory (MEM1) of the first content reader, a search (C_SRCH) of the first content (c1) requested in the content storage memory (EME1), in which a first access processing adapted to the given format (tta1(f)) is associated with the first requested content (c1), and in which the first access processing, the first content and a link with a respective first execution processing are stored in a first container of the content storage memory and constitute a first autonomous content (ev1); and
- in response to the search, obtaining of a first access processing and of the link with the respective first execution processing, an execution (TTA_EXE) of the first access processing (tta1(f)) by the respective first execution processing, the respective first execution processing being stored in the virtualization layer among a plurality of distinct execution processings, each of the distinct execution processings being associated with at least one autonomous content stored in the content storage memory the respective first execution processing being adapted to execute the first access processing of the first autonomous content by using the hardware abstraction layer of the first content reader.

7. Consultation method according to the preceding claim, **characterized in that** the execution (TTA_EXE) of the access processing is implemented by an execution processing associated with the autonomous content on the hardware abstraction layer of the content reader implemented by the processor of the content reader.

8. Content management method comprising a storage method according to any one of Claims 1 to 5 and a consultation method according to either one of Claims 6 and 7.

9. Program comprising program code instructions for the execution of the steps of the storage method according to any one of Claims 1 to 5 or of the consultation method according to either one of Claims 6 and 7 or of the content management method according to the preceding claim when the program is run by a processor.

10. Content reader (1) comprising a first content storage memory (10), a virtualization layer (11), a hardware abstraction layer (12), and a processor (13) implementing the storage method according to any one of Claims 1 to 5.

11. Content reader according to the preceding claim, **characterized in that** the processor implements the consultation method according to either one of Claims 6 and 7.

12. Content reader comprising a first content storage memory, a virtualization layer, a hardware abstraction layer, and a processor implementing the content management method according to Claim 8.

13. Content reader according to Claim 10, **characterized in that** the first content storage memory is a memory external to the content reader connected to said content reader during the implementation of the storage method.
